# FASCICULE DE BREVET EUROPEEN

(11) **EP 1 667 944 B1**
(45) Date de publication et mention de la délivrance du brevet: **25.07.2007**
(21) Numéro de dépôt: 04786367.5
(22) Date de dépôt: 30.08.2004
(51) Int. Cl.: C04B 35/106, C04B 35/109, C04B 35/119, C04B 35/18, C04B 35/19, C04B 35/10

(54) **PIECE CRUE DESTINEE A LA FABRICATION D UN PRODUIT REFRACTAIRE FRITTE PRESENTANT UN COMPORTEMENT AU BULLAGE AMELIORE**
HOHLTEIL ZUR HERSTELLUNG EINES FEUERFESTEN SINTERPRODUKTS MIT VERBESSERTEM BLASENVERHALTEN
HOLLOW PIECE FOR PRODUCING A SINTERED REFRACTORY PRODUCT EXHIBITING IMPROVED BUBBLING BEHAVIOUR

(30) Priorité: 01.09.2003 FR 0310350
(43) Date de publication de la demande: 14.06.2006
(73) Titulaire: Saint-Gobain Centre de Recherches et d'Etudes Européen, 92400 Courbevoie (FR)
(72) Inventeur: AVEDIKIAN, Richard, F-84440 Robion (FR); BOUSSANT-ROUX, Yves, F-84140 Montfavet (FR); GUIGONIS, Jacques, F-84210 PERNES LES FONTAINES (FR)
(74) Mandataire: Sartorius, Jérome
(86) Numéro de dépôt international: PCT/FR2004/002210
(87) Numéro de publication internationale: WO 2005/023726

(56) Documents cités:
- DE-A- 3 842 280
- GB-A- 2 147 287
- US-A- 4 308 067
- US-A1- 2001 019 992
- US-A1- 2002 013 212

## Description

L'invention se rapporte à un produit réfractaire fritté alumineux, à un procédé de fabrication de ce produit réfractaire, et à une pièce crue, ou « préforme », destinée à être frittée pour obtenir ce produit réfractaire.

Parmi les produits réfractaires, on distingue les produits fondus et coulés et les produits frittés.

A la différence des produits frittés, tels que décrits par exemple dans US 2001/0019992 A1, les produits fondus et coulés comportent le plus souvent une phase vitreuse intergranulaire reliant des grains cristallisés. Les problèmes posés par les produits frittés et par les produits fondus et coulés, et les résolutions techniques adoptées pour les résoudre, sont donc généralement différents. Une composition mise au point pour fabriquer un produit fondu et coulé n'est donc pas *a priori* utilisable telle quelle pour fabriquer un produit fritté et réciproquement.

Les produits frittés sont obtenus par mélange de matières premières appropriées puis mise en forme à cru de ce mélange et cuisson de la forme crue résultante à une température et pendant un temps suffisants pour obtenir le frittage de cette forme crue. Cette cuisson peut s'effectuer dans des fours de cuisson ou bien *in situ* dans le four de verrerie pour les produits vendus crus ou non façonnés.

Les produits frittés, selon leur composition chimique et leur mode de préparation, sont destinés à des industries très variées.

Parmi les produits frittés, les produits alumine-zircone-silice, couramment appelées AZS, ainsi que les produits dits alumineux sont utilisés dans les zones des fours de fusion du verre.

Les produits tels que ceux décrits dans FR 2 552 756 au nom de Emhart Industries conviennent généralement bien. Des produits tels que le BPAL, le ZA33 ou le ZIRAL, produits et commercialisés par Saint-Gobain SefPro sont également particulièrement bien adaptés et aujourd'hui très largement utilisés. Cependant, avec certaines compositions de verre récentes, la formation de bulles a été observée. Ces bulles sont générées au contact des produits réfractaires constituant le four et sont ensuite piégées dans le verre donnant lieu à des défauts rédhibitoires.

Il existe donc un besoin pour un produit fritté induisant un phénomène de bullage réduit et utilisable dans les fours de verrerie. La présente invention vise à satisfaire ce besoin.

A cet effet, l'invention propose une pièce crue ayant la composition chimique minérale moyenne, en pourcentage en poids sur la base des oxydes minéraux, suivante :
40 % ≤ Al₂O₃ ≤ 94 %,
0 % ≤ ZrO₂ ≤ 41 %,
2 % ≤ SiO₂ ≤ 22 %, de préférence 3 % ≤ SiO₂ ≤ 22 %,
1 % ≤ Y₂O₃ + V₂O₅ + TiO₂ + Sb₂O₃ + Yb₂O₃ + Na₂O, ladite pièce crue étant obtenue à partir d'un mélange de matières premières dans lequel a été ajoutée une quantité supérieure ou égale à 1 % d'un constituant constitué par un ou plusieurs des oxydes parmi Y₂O_{3,} V₂O_{5,} TiO_{2,} Sb₂O_{3,} Yb₂O₃ et Na₂O.

Comme nous le verrons plus loin, avantageusement, les produits réfractaires frittés obtenus à partir de cette pièce crue induisent un phénomène de bullage réduit.

Selon d'autres caractéristiques préférées de l'invention :
- TiO₂ ≥ 2%.
- ZrO₂< 35 %, de préférence ZrO₂ < 30 %.
- La teneur totale Y₂O₃ + V₂O₅ + TiO₂ + Sb₂O₃ + Yb₂O₃ + Na₂O est inférieure ou égale à 5%. En effet, au delà de cette valeur, les phases cristallines principales peuvent être modifiées, entraînant une dégradation d'autres propriétés des produits (résistance à la corrosion ou lâcher de défauts par exemple).
- La teneur totale en Y₂O₃ + V₂O₅ + TiO₂ + Sb₂O₃ + Yb₂O₃ + Na₂O est supérieure ou égale à 1%, de préférence à 2%, de préférence encore à 3%, en pourcentage en poids sur la base des oxydes minéraux. Avantageusement, une teneur élevée en Y₂O₃ + V₂O₅ + TiO₂ + Sb₂O₃ + Yb₂O₃ + Na₂O améliore en effet le comportement au bullage du produit.
- La teneur d'au moins un oxyde parmi Y₂O₃, V₂O₅, TiO₂, Sb₂O₃, Yb₂O₃ et Na₂O, de préférence parmi Y₂O₃, V₂O₅, TiO₂, Sb₂O₃, et Yb₂O₃, de préférence encore parmi Y₂O₃ et TiO₂, est supérieure à 1 %, de préférence à 2%, de préférence encore à 3%, en pourcentage en poids sur la base des oxydes minéraux. TiO₂ et Y₂O₃ sont les oxydes préférés parmi Y₂O_{3,} V₂O_{5,} TiO_{2,} Sb₂O_{3,} Yb₂O₃ et Na₂O. En effet, ils permettent d'obtenir de très bons résultats à un coût réduit. En revanche, l'emploi de Na₂O peut être préjudiciable vis-à-vis de la faisabilité industrielle, la formation possible de néphéline (2SiO₂Al₂O₃Na₂O) pouvant conduire à des défauts.

L'invention se rapporte également à un produit réfractaire obtenu par frittage d'une pièce crue selon l'invention, et ayant donc une composition chimique minérale moyenne en oxydes conforme à celle d'une pièce crue selon l'invention.

En effet, la composition en oxydes du produit fritté est sensiblement égale à celles de la pièce crue et du mélange de départ.

L'invention concerne aussi l'utilisation d'un produit réfractaire selon l'invention dans une zone d'un four de verrerie, en particulier pour la fabrication de verre sodocalcique (SCC) ou extra-blanc (SCEB).

L'invention concerne enfin un procédé de fabrication d'un produit réfractaire fritté comportant au moins les étapes successives suivantes :
a) préparation d'une pièce crue selon l'invention à partir d'un mélange de matières premières dans lequel a été ajoutée une quantité supérieure ou égale à 1 % d'un constituant constitué par un ou plusieurs des oxydes parmi Y₂O_{3,} V₂O_{5,} TiO_{2,} Sb₂O_{3,} Yb₂O₃ et Na₂O, en pourcentage en poids sur la base des oxydes minéraux,
b) frittage de ladite pièce crue.

Avantageusement, en ajoutant une quantité supérieure à 1 % d'un constituant comportant au moins un oxyde parmi Y₂O₃, V₂O₅, TiO₂, Sb₂O₃, Yb₂O₃ et Na₂O, on s'assure que cette quantité dépasse 1 % dans le produit fabriqué, quel que soit le taux d'impuretés des matières premières utilisées.

Par « pièce crue », on entend la pièce avant frittage. Le frittage correspond à la consolidation thermique du matériau. Il s'accompagne généralement d'une diminution de la porosité et d'un retrait dimensionnel. La pièce crue est classiquement constituée d'oxydes minéraux (composition chimique minérale), d'eau et de composés organiques (liants) permettant d'assurer la tenue mécanique de la pièce. L'eau et les liants organiques sont éliminés au cours du cycle thermique de frittage.

Les exemples non limitatifs suivants sont donnés dans le but d'illustrer l'invention.

Dans ces exemples, les matières premières employées ont été choisies parmi :
- des grains de taille comprise entre 0 et 20 mm, obtenus par broyage de produits réfractaires électrofondus tels que l'ER-1681 ou l'ER-1711, produits et commercialisés par la Société Européenne des Produits Réfractaires. Ces produits contiennent en pourcentage en poids, sur la base des oxydes : 32 à 54% de ZrO₂, 36 à 51% d'Al₂O₃, 2 à 16% de SiO₂ et 0,2 à 1,5% de Na₂O ;
- des grains d'alumine tabulaire ou électrofondue contenant plus de 99% d'alumine et dont la taille est comprise entre 40 µm et 3,5 mm ;
- des grains de mullite fondue ou frittée, par exemple une poudre qui contient 76,5% d'Al₂O₃ et 22,5% de SiO₂ et dont la grosseur des particules varie de 0,7 à 3 mm ;
- des produits à forte teneur en zircone, tels que la CS10 ou la CC10, commercialisées par la Société Européenne des Produits Réfractaires. Ces produits contiennent plus de 99% de ZrO₂ et le diamètre médian (D50) des particules de zircone est de 3,5 µm;
- de l'alumine réactive, ou un mélange d'alumines réactives, contenant plus de 99% d'Al₂O_{3,} le diamètre médian des particules d'alumine réactive pouvant varier de 0,5 µm à 3 µm;
- de l'alumine électrofondue dont les particules ont une taille comprise entre 0,04 et 0,5 mm ;
- de la fumée de silice commercialisée par la Société Européenne des Produits Réfractaires. Cette silice vitreuse contient plus de 93% de silice (SiO₂) et se présente sous la forme d'une poudre dont les particules ont un diamètre médian de 1 µm maximum.Tous nos exemples en contiennent au moins 2%;
- un ciment hydraulique ou un mélange de différents ciments ; on préfère utiliser un ciment à forte teneur en alumine, tel que le CA25 de la société Alcoa. Le CA25 contient plus de 78% d'Al₂O₃ et moins de 19% de CaO.
- du zircon sous forme de sable ou bien micronisé et contenant 33% de silice,
- de l'oxyde d'yttrium, de titane, de vanadium, d'ytterbium et/ou d'antimoine de pureté supérieure à 99%,
- du carbonate de calcium Ca₂CO₃.

Des blocs réfractaires frittés ont été fabriqués selon un procédé comportant classiquement les étapes suivantes :
a) préparation d'un mélange de matières premières,
b) formation d'une pièce crue à partir dudit mélange,
c) frittage de ladite pièce crue.

A l'étape a), les matières premières ont été dosées de manière que le mélange ait la composition chimique minérale pondérale moyenne désirée, puis mélangées en présence d'eau et d'au moins un dispersant, par exemple un phosphate de sodium.

Le mélange a ensuite été coulé dans un moule de dimensions 230 mm x 114 mm x 64 mm de manière à former une pièce crue ayant une résistance mécanique suffisante pour pouvoir être manipulée.

La pièce crue a alors été frittée à une température comprise entre 1300°C et 1500°C, de manière à former un bloc réfractaire.

Sur les différents exemples de blocs réalisés, des échantillons ont été prélevés pour réaliser des tests de bullage. L'échantillon de produit réfractaire constitue un creuset dont l'épaisseur des parois est de 5 mm, de diamètre intérieur de 30 mm.

Dans ce test, l'échantillon contient du verre. Le type de verre est indiqué dans le tableau 1. Il peut s'agir d'un verre sodocalcique classique (SCC) ou extra-blanc (SCEB).

Le creuset contenant le verre est ensuite porté à la température souhaitée (1250°C pour le SCC et 1150-1250°C pour le verre SCEB) sous air pendant 30 heures pour reproduire les conditions de température et d'atmosphère caractéristiques des conditions d'utilisation industrielles.

On mesure ensuite l'indice de bullage (IB), compris entre 1 (minimum de bullage) et 10 (bullage intense), correspondant au nombre de bulles de gaz emprisonnées dans le verre après refroidissement. L'indice de bullage est considéré comme bon s'il est inférieur ou égal à 5.

L'analyse chimique de différents produits testés et les résultats des tests sont donnés dans le tableau 1. L'analyse est une analyse chimique moyenne, donnée en pourcentage en poids sur la base des oxydes minéraux. Le complément correspond à CaO et aux impuretés telles que MgO, K₂O et Fe₂O₃.

**Tableau 1**

| Test | Al₂O₃ (%) | ZrO₂ (%) | SiO₂ (%) | Ajout | Ajout (%) | Verre | IB |
|---|---|---|---|---|---|---|---|
| 1 | 75,5 | 10,5 | 12,5 | | 0 | SCEB | 9 |
| 2 | 75,0 | 10,5 | 12,5 | Y₂O₃ | 0,5 | SCEB | 9 |
| 3 | 74,5 | 10,5 | 12,5 | Y₂O₃ | 1 | SCEB | 5 |
| 4 | 74,0 | 10,5 | 12,5 | Y₂O₃ | 1,5 | SCEB | 4 |
| 5 | 73,5 | 10,5 | 12,5 | Y₂O₃ | 2 | SCEB | 2 |
| 6 | 72,5 | 10,5 | 12,5 | Y₂O₃ | 3 | SCEB | 2 |
| 7 | 71,5 | 10,5 | 12,5 | Y₂O₃ | 4 | SCEB | 2 |
| 8 | 70,5 | 10,5 | 12,5 | Y₂O₃ | 5 | SCEB | 2 |
| 9 | 70,0 | 19,0 | 10,0 | | 0 | SCEB | 9 |
| 10 | 68,0 | 19,0 | 10,0 | Y₂O₃ | 2 | SCEB | 5 |
| 11 | 67,0 | 19,0 | 10,0 | Y₂O₃ | 3 | SCEB | 5 |
| 12 | 53,0 | 28,5 | 16,0 | | 0 | SCEB | 6 |
| 13 | 51,0 | 28,5 | 16,0 | Y₂O₃ | 2 | SCEB | 5 |
| 14 | 93,0 | 0,0 | 6,0 | | 0 | SCEB | 8 |
| 15 | 91,5 | 0,0 | 6,0 | Y₂O₃ | 1,5 | SCEB | 5 |
| 16 | 91,0 | 0,0 | 6,0 | Y₂O₃ | 2 | SCEB | 5 |
| 17 | 91,0 | 0,0 | 6,0 | Y₂O₃ | 2 | SCEB | 5 |
| 18 | 90,0 | 0,0 | 6,0 | Y₂O₃ | 3 | SCEB | 5 |
| 19 | 89,0 | 0,0 | 6,0 | Y₂O₃ | 4 | SCEB | 5 |
| 20 | 93,0 | 0,0 | 6,0 | | 0 | SCC | 6 |
| 21 | 92,0 | 0,0 | 6,0 | Y₂O₃ | 1 | SCC | 5 |
| 22 | 91,0 | 0,0 | 6,0 | Y₂O₃ | 2 | SCC | 5 |
| 23 | 90,0 | 0,0 | 6,0 | Y₂O₃ | 3 | SCC | 4 |
| 24 | 89,0 | 0,0 | 6,0 | Y₂O₃ | 4 | SCC | 4 |
| 25 | 48,0 | 30,0 | 20,0 | | 0 | SCEB | 7 |
| 26 | 46,0 | 30,0 | 20,0 | Y₂O₃ | 2 | SCEB | 3 |
| 27 | 45,0 | 30,0 | 20,0 | Y₂O₃ | 3 | SCEB | 3 |
| 28 | 45,0 | 28,0 | 22,0 | Y₂O₃ | 3 | SCEB | 3 |
| 29 | 42,0 | 33,0 | 20,0 | Y₂O₃ | 3 | SCEB | 3 |
| 30 | 91,5 | 0,0 | 6,0 | TiO₂ | 1,5 | SCEB | 7 |
| 31 | 91,0 | 0,0 | 6,0 | TiO₂ | 2 | SCEB | 5 |
| 32 | 90,0 | 0,0 | 6,0 | TiO₂ | 3 | SCEB | 3 |
| 33 | 88,5 | 0,0 | 6,0 | TiO₂ | 4,5 | SCEB | 3 |
| 34 | 40,0 | 32,0 | 22,0 | TiO₂ | 4,0 | SCEB | 4 |
| 35 | 92,0 | 0,0 | 6,0 | Sb₂O₃ | 1,0 | SCEB | 5 |
| 36 | 90,0 | 0,0 | 6,0 | Sb₂O₃ | 3 | SCEB | 2 |
| 37 | 89,0 | 0,0 | 6,0 | Sb₂O₃ | 4,0 | SCEB | 2 |
| 38 | 91,5 | 0,0 | 6,0 | V₂O₃ | 1,5 | SCEB | 4 |
| 39 | 90,5 | 0,0 | 6,0 | V₂O₃ | 2,5 | SCEB | 4 |
| 40 | 91,0 | 0,0 | 6,0 | Yb₂O₃ | 1,0 | SCEB | 4 |
| 41 | 90,0 | 0,0 | 6,0 | Yb₂O₃ | 2,0 | SCEB | 3 |
| 42 | 92,0 | 0,0 | 6,0 | Na₂O | 1,0 | SCEB | 5 |
| 43 | 90,5 | 0,0 | 6,0 | Na₂O | 2,5 | SCEB | 5 |
| 44 | 93,0 | 0,0 | 4,0 | Y₂O₃ | 2,0 | SCC | 4 |
| 45 | 94,0 | 0,0 | 4,0 | Y₂O₃ | 1 | SCC | 5 |
| 46 | 90,0 | 0,0 | 5,0 | TiO₂ | 4,0 | SCEB | 3 |
| 47 | 71,5 | 10,5 | 12,5 | Y₂O₃(2)+TiO₂(2) | 4,0 | SCEB | 2 |
| 48 | 70,5 | 10,5 | 12,5 | Y₂O₃(3)+Sb₂O₃(2) | 5,0 | SCEB | 2 |
| 49 | 98,5 | 0,0 | 5,0 | Y₂O₃(2,5)+Yb₂O₃(2) | 4,5 | SCEB | 3 |
| 50 | 40 | 40 | 15 | Y₂O₃ | 3 | SCEB | 3 |
| 51 | 42 | 37 | 16 | Y₂O₃ | 3 | SCEB | 4 |
| 52 | 95 | 0 | 3 | Y₂O₃ | 2 | SCC | 5 |
| 53 | 96,7 | 0 | 2,3 | Y₂O₃ | 0 | SCEB | 6 |
| 54 | 95,7 | 0 | 2,3 | Y₂O₃ | 1 | SCEB | 3 |
| 55 | 94,7 | 0 | 2,3 | Y₂O₃ | 2 | SCEB | 2 |
| 56 | 96,7 | 0 | 2,7 | Y₂O₃ | 0 | SCEB | 6 |
| 57 | 95,7 | 0 | 2,7 | Y₂O₃ | 1 | SCEB | 4 |
| 58 | 94,7 | 0 | 2,7 | Y₂O₃ | 2 | SCEB | 2 |

Ces exemples permettent de constater qu'un ajout total d'un ou plusieurs des oxydes Y₂O_{3,} V₂O_{5,} TiO_{2,} Sb₂O_{3,} Yb₂O_{3,} et Na₂O supérieur ou égal à 1 % et, de préférence, au delà de 1,5% permet de réduire le bullage et ainsi de diminuer considérablement la formation de défauts dans le verre.

L'introduction de Sb₂O₃ est rendue difficile à cause de sa volatilisation partielle lors du frittage. Yb₂O₃ est un composé très cher par rapport aux autres oxydes de la composition. Par ailleurs, TiO₂ présente, dans certains cas, un risque de coloration du verre et pourrait agir sur le frittage. Pour ces raisons, Y₂O₃ est l'ajout préféré pour réduire le bullage. Les exemples montrent que son influence est optimale pour une teneur comprise entre 1,5 et 2,5%.

La comparaison des exemples 14 et 30 permet de constater que l'ajout de 1,5% de TiO₂ a un effet positif sur l'indice de bullage. La comparaison des exemples 30 et 31 montre cependant qu'une teneur en TiO₂ supérieure à 2 % est préférable quand TiO₂ constitue le seul oxyde parmi Y₂O_{3,} V₂O_{5,} TiO_{2,} Sb₂O_{3,} Yb₂O_{3,} et Na₂O à avoir été ajouté.

L'analyse cristallographique des produits de l'invention révèle une phase principale de corindon, éventuellement associée à de la mullite et de la zircone.

Par ailleurs, lorsque la zircone est présente, on trouve de la zircone sous forme monoclinique ou quadratique. Ainsi, les teneurs en Y₂O₃ + V₂O₅ + TiO₂ + Sb₂O₃ + Yb₂O₃ + Na₂O de l'invention sont-elles insuffisantes pour stabiliser complètement la zircone. De plus, on constate que ces oxydes permettent de diminuer le bullage sur des produits alumineux ne contenant pas de zircone. L'invention n'est donc pas liée à une stabilisation de la zircone.

Sans être lié par aucune théorie, la Demanderesse explique les performances des produits selon l'invention de la manière suivante.

La mullite dans la fraction fine pourrait entraîner une modification des propriétés de conduction du produit, en particulier de sa fraction fine (grains inférieurs à 50 µm), par création de nouvelles phases ou par limitation de phases existantes dans le produit de référence (par exemple la mullite). La présence, dans la pièce crue, d'un ou plusieurs des oxydes parmi Y₂O₃, V₂O₅, TiO₂, Sb₂O₃, Yb₂O₃ et Na₂O permettrait de limiter avantageusement la disponibilité de l'alumine et/ou la silice susceptible de réagir pour former de la mullite dans la fraction fine.

Bien entendu, la présente invention n'est pas limitée au mode de réalisation décrit et représenté fourni à titre d'exemple illustratif et non limitatif.

## Revendications

1. Pièce crue ayant la composition chimique minérale moyenne suivante, en pourcentage en poids sur la base des oxydes minéraux :
40 % ≤ Al₂O₃,
0 % ≤ ZrO₂ ≤ 41%,
2% ≤ SiO₂ ≤ 22%,
1 % ≤ Y₂O₃ + V₂O₅ + TiO₂ + Sb₂O₃ + Yb₂O₃ + Na₂O, ladite pièce crue étant obtenue à partir d'un mélange de matières premières dans lequel a été ajoutée une quantité supérieure ou égale à 1 % d'un constituant constitué par un ou plusieurs des oxydes parmi Y₂O_{3,} V₂O_{5,} TiO_{2,} Sb₂O_{3,} Yb₂O₃ et Na₂O.

2. Pièce crue selon la revendication 1 ayant la composition chimique minérale moyenne suivante, en pourcentage en poids sur la base des oxydes minéraux :
40 % ≤ Al₂O₃ ≤ 94 %,
0% ≤ ZrO₂ ≤ 41%,
2% ≤ SiO₂ ≤ 22%,
1 % ≤ Y₂O₃ + V₂O₅ + TiO₂ + Sb₂O₃ + Yb₂O₃ + Na₂O.

3. Pièce crue selon l'une des revendications précédentes, **caractérisée en ce que**, en pourcentage en poids sur la base des oxydes minéraux,
3% ≤ SiO₂

4. Pièce crue selon l'une des revendications précédentes, **caractérisée en ce que**, en pourcentage en poids sur la base des oxydes minéraux,
TiO₂ ≥ 2%.

5. Pièce crue selon l'une des revendications précédentes, **caractérisée en ce que**, en pourcentage en poids sur la base des oxydes minéraux,
Y₂O₃ + V₂O₅ + TiO₂ + Sb₂O₃ + Yb₂O₃ + Na₂O ≤ 5%.

6. Pièce crue selon l'une quelconque des revendications précédentes, **caractérisée en ce que**, en pourcentage en poids sur la base des oxydes minéraux,
Y₂O₃ + V₂O₅ + TiO₂ + Sb₂O₃ + Yb₂O₃ + Na₂O > 2%.

7. Pièce crue selon l'une quelconque des revendications précédentes, **caractérisée en ce que**, en pourcentage en poids sur la base des oxydes minéraux,
Y₂O₃ + V₂O₅ + TiO₂ + Sb₂O₃ + Yb₂O₃ + Na₂O > 3%.

8. Pièce crue selon l'une quelconque des revendications précédentes, **caractérisée en ce que** la teneur, en pourcentage en poids sur la base des oxydes minéraux, d'au moins un oxyde parmi Y₂O₃, V₂O₅, TiO₂, Sb₂O₃, Yb₂O₃ et Na₂O est supérieure à 1 %.

9. Pièce crue selon l'une quelconque des revendications précédentes, **caractérisée en ce que** la teneur, en pourcentage en poids sur la base des oxydes minéraux, d'au moins un oxyde parmi Y₂O₃, V₂O₅, TiO₂, Sb₂O₃, Yb₂O₃ et Na₂O est supérieure à 2 %.

10. Pièce crue selon l'une quelconque des revendications précédentes, **caractérisée en ce que** la teneur, en pourcentage en poids sur la base des oxydes minéraux, d'au moins un oxyde parmi Y₂O₃, V₂O₅, TiO₂, Sb₂O₃, Yb₂O₃ et Na₂O est supérieure à 3 %.

11. Pièce crue selon l'une quelconque des revendications précédentes, **caractérisée en ce que**, en pourcentage en poids sur la base des oxydes minéraux,
Y₂O₃ ≥ 1%.

12. Pièce crue selon l'une quelconque des revendications précédentes, **caractérisée en ce que**, en pourcentage en poids sur la base des oxydes minéraux,
Y₂O₃ ≥ 2%.

13. Pièce crue selon l'une quelconque des revendications précédentes, **caractérisée en ce que**, en pourcentage en poids sur la base des oxydes minéraux,
Y₂O₃ ≥ 3%.

14. Produit réfractaire fritté obtenu par frittage d'une pièce crue selon l'une quelconque des revendications précédentes.

15. Utilisation d'un produit réfractaire fritté selon la revendication 14 dans une zone terminale d'un four de verrerie, en particulier pour la fabrication de verre sodocalcique (SCC) ou extra-blanc (SCEB).

16. Procédé de fabrication d'un produit réfractaire fritté comportant au moins les étapes successives suivantes :
a) préparation d'une pièce crue selon l'une quelconque des revendications 1 à 13 à partir d'un mélange de matières premières dans lequel a été ajoutée une quantité supérieure ou égale à 1 % d'un constituant constitué par un ou plusieurs des oxydes parmi Y₂O₃, V₂O₅, TiO₂, Sb₂O₃, Yb₂O₃ et Na₂O, en pourcentage en poids sur la base des oxydes minéraux,
b) frittage de ladite pièce crue.

## Claims

1. Crude part with the following mean mineral chemical composition, in weight percent based on the mineral oxides:
40% ≤ Al₂O₃
0% ≤ ZrO₂ ≤ 41%
2% ≤ SiO₂ ≤ 22%
1% ≤ Y₂O₃+V₂O₅+TiO₂+Sb₂O₃+Yb₂O₃+Na₂O said crude part being obtained from a mixture of raw materials to which has been added a quantity greater than or equal to 1% of a constituent constituted by one or more of the oxides of Y₂O_{3,} V₂O_{5,} TiO_{2,} Sb₂O_{3,} Yb₂O₃ and Na₂O.

2. Crude part according to claim 1 with the following mean mineral chemical composition, in weight percent based on the mineral oxides:
40% ≤ Al₂O₃ ≤ 94%
0% ≤ ZrO₂ ≤ 41%
2% ≤ SiO₂ ≤ 22%
1% ≤ Y₂O₃ + V₂O₅ + TiO₂ + Sb₂O₃ + Yb₂O₃ + Na₂O.

3. Crude part according to any of the preceding claims, **characterised in that**, in weight percent based on the mineral oxides,
3% ≤ SiO₂.

4. Crude part according to any of the preceding claims, **characterised in that**, in weight percent based on the mineral oxides,
TiO₂ ≥ 2%.

5. Crude part according to any of the preceding claims, **characterised in that**, in weight percent based on the mineral oxides,
Y₂O₃ + V₂O₅ + TiO₂ + Sb₂O₃ + Yb₂O₃ +Na₂O≤ 5%.

6. Crude part according to any of the preceding claims, **characterised in that**, in weight percent based on the mineral oxides,
Y₂O₃ + V₂O₅ + TiO₂ + Sb₂O₃ + Yb₂O₃ + Na₂O > 2%.

7. Crude part according to any of the preceding claims, **characterised in that**, in weight percent based on the mineral oxides,
Y₂O₃ + V₂O₅ + TiO₂ + Sb₂O₃ + Yb₂O₃ + Na₂O > 3%.

8. Crude part according to any of the preceding claims, **characterised in that** the content, in weight percent based on the mineral oxides, of at least one oxide amongst Y₂O₃, V₂O₅, TiO₂, Sb₂O₃, Yb₂O₃ and Na₂O is greater than 1%.

9. Crude part according to any of the preceding claims, **characterised in that** the content, in weight percent based on the mineral oxides, of at least one oxide amongst Y₂O₃, V₂O₅, TiO₂, Sb₂O₃, Yb₂O₃ and Na₂O is greater than 2%.

10. Crude part according to any of the preceding claims, **characterised in that** the content, in weight percent based on the mineral oxides, of at least one oxide amongst Y₂O_{3,} V₂O_{5,} TiO_{2,} Sb₂O_{3,} Yb₂O₃ and Na₂O is greater than 3%.

11. Crude part according to any of the preceding claims, **characterised in that**, in weight percent based on the mineral oxides,
Y₂O₃ ≥ 1%.

12. Crude part according to any of the preceding claims, **characterised in that**, in weight percent based on the mineral oxides,
Y₂O₃ ≥ 2%.

13. Crude part according to any of the preceding claims, **characterised in that**, in weight percent based on the mineral oxides,
Y₂O₃ ≥ 3%.

14. Sintered refractory product obtained by sintering a crude part according to any of the preceding claims.

15. Use of a sintered refractory product according to claim 14 in a terminal zone of a glass furnace, in particular for production of alkali-lime glass (SCC) or extra-white glass (SCEB).

16. Method for production of a sintered refractory product comprising at least the following successive steps:
a) preparation of a crude part according to any of claims 1 to 13 from a mixture of raw materials to which has been added a quantity greater than or equal to 1% of a constituent constituted by one or more of the oxides of Y₂O_{3,} V₂O_{5,} TiO_{2,} Sb₂O_{3,} Yb₂O₃ and Na₂O in weight percent based on the mineral oxides,
b) sintering of said crude part.

## Patentansprüche

1. Rohes Stück, das die folgende durchschnittliche mineralische chemische Zusammensetzung hat, in Gewichtsprozent auf Basis der Mineraloxide:
40%≤Al₂O₃
0%≤ZrO₂≤41%,
2%≤SiO₂≤22%,
1%≤Y₂O₃+V₂O₅+TiO₂+Sb₂O₃+Yb₂O₃+Na₂O,
wobei das vorgenannte rohe Stück erhalten wurde aus einer Mischung von Ausgangsstoffen, der ein Zuschlagstoff bestehend aus einem oder mehreren der Oxide Y₂0₃, V₂0₅, TiO₂, Sb₂0₃, Yb₂O₃ und Na₂O in einer Menge von mindestens 1% zugegeben wurde.

2. Rohes Stück nach Anspruch 1, das die folgende durchschnittliche mineralische chemische Zusammensetzung hat, in Gewichtsprozent auf Basis der Mineraloxide:
40%≤Al₂O₃≤94%,
0%≤ZrO₂≤41%,
2%≤SiO₂≤22%,
1%≤Y₂O₃+V₂O₅+TiO₂+Sb₂O₃+Yb₂O₃+Na₂O.

3. Rohes Stück nach Anspruch 1, **dadurch gekennzeichnet, dass** in Gewichtsprozent auf Basis der Mineraloxide,
3%≤SiO₂.

4. Rohes Stück nach einem der Ansprüche 1 und 2, **dadurch gekennzeichnet, dass** in Gewichtsprozent auf Basis der Mineraloxide,
TiO₂≥2%.

5. Rohes Stück nach einem der vorhergehenden Ansprüche, **dadurch gekennzeichnet, dass** in Gewichtsprozent auf Basis der Mineraloxide,
Y₂O₃ + V₂O₅ + TiO₂ + Sb₂O₃ + Yb₂O₃ + Na₂O ≤ 5%.

6. Rohes Stück nach irgendeinem der vorhergehenden Ansprüche, **dadurch gekennzeichnet, dass** in Gewichtsprozent auf Basis der Mineraloxide,
Y₂O₃ + V₂O₅ + TiO₂ + Sb₂O₃ + Yb₂O₃ + Na₂O > 2%.

7. Rohes Stück nach irgendeinem der vorhergehenden Ansprüche, **dadurch gekennzeichnet, dass** in Gewichtsprozent auf Basis der Mineraloxide,
Y₂O₃ + V₂O₅ + TiO₂ + Sb₂O₃ + Yb₂O₃ + Na₂O > 3%.

8. Rohes Stück nach irgendeinem der vorhergehenden Ansprüche, **dadurch gekennzeichnet, dass** der Gehalt in Gewichtsprozent auf Basis der Mineraloxide wenigstens eines der folgenden Oxide Y₂O₃, V₂O₅, TiO₂, Sb₂O₃, Yb₂O₃ und Na₂O höher ist als 1 %.

9. Rohes Stück nach irgendeinem der vorhergehenden Ansprüche, **dadurch gekennzeichnet, dass** der Gehalt in Gewichtsprozent auf der Basis der Mineraloxide wenigstens eines der folgenden Oxide Y₂0₃, V₂O₅, TiO₂, Sb₂O₃, Yb₂O₃ und Na₂O höher ist als 2 %.

10. Rohes Stück nach irgendeinem der vorhergehenden Ansprüche, **dadurch gekennzeichnet, dass** der Gehalt in Gewichtsprozent auf der Basis der Mineraloxide wenigstens eines der folgenden Oxide Y₂O₃, V₂O₅, TiO₂, Sb₂O₃, Yb₂O₃ und Na₂O höher ist als 3 %.

11. Rohes Stück nach irgendeinem der vorhergehenden Ansprüche, **dadurch gekennzeichnet, dass** in Gewichtsprozent auf der Basis der Mineraloxide,
Y₂O₃≥1%.

12. Rohes Stück nach irgendeinem der vorhergehenden Ansprüche, **dadurch gekennzeichnet, dass** in Gewichtsprozent auf Basis der Mineraloxide,
Y₂O₃≥2%.

13. Rohes Stück nach irgendeinem der vorhergehenden Ansprüche, **dadurch gekennzeichnet, dass** in Gewichtsprozent auf Basis der Mineraloxide,
Y_{Z}O₃≥3%.

14. Gesintertes feuerfestes Produkt, das durch Sintern eines rohen Stückes nach irgendeinem der vorhergehenden Ansprüche erhalten wurde.

15. Verwendung eines feuerfesten Produktes, das nach Anspruch 13 in einer Abschlusszone eines Glasofens, insbesondere eines Glasofens für die Herstellung von Kalk-Natron-Glas (SCC) oder von Weiß-Glas bzw. von weißem Hohlglas (SCEB), gesintert wurde.

16. Verfahren zur Herstellung eines gesinterten feuerfesten Produktes, das zumindest die folgenden, nacheinander durchgeführten Verfahrensschritte umfasst:
a) Vorbereitung eines rohen Stückes nach irgendeinem der Ansprüche 1 bis 12 ausgehend von einer Mischung der Ausgangsmaterialien, der eine Menge von über 1% eines Bestandteils gebildet durch eines oder mehrere der folgenden Oxide Y₂O₃, V₂O₅, TiO₂, Sb₂O₃, Yb₂O₃ und Na₂O, in Gewichtsprozent auf der Basis der Mineraloxide, hinzugefügt worden ist,
b) Sintern des besagten rohen Stücks.
